# EUROPÄISCHE PATENTSCHRIFT

(11) **EP 3 559 620 B1**
(45) Veröffentlichungstag und Bekanntmachung des Hinweises auf die Patenterteilung: **23.06.2021**
(21) Anmeldenummer: 17809298.7
(22) Anmeldetag: 06.12.2017
(51) Int. Cl.: G01K 1/16, G01K 7/02, G01K 7/16, G01K 1/08

(54) **TEMPERATURSENSOR**
TEMPERATURE SENSOR
CAPTEUR DE TEMPÉRATURE

(30) Priorität: 22.12.2016 DE 102016125403
(43) Veröffentlichungstag der Anmeldung: 30.10.2019
(73) Patentinhaber: Endress+Hauser Wetzer GmbH+Co. KG, 87484 Nesselwang (DE)
(72) Erfinder: SAECKER, Dietmar, 87629 Füssen (DE); UMKEHRER, Alfred, 87659 Hopferau (DE)
(74) Vertreter: Andres, Angelika Maria
(86) Internationale Anmeldenummer: PCT/EP2017/081684
(87) Internationale Veröffentlichungsnummer: WO 2018/114336

(56) Entgegenhaltungen:
- WO-A2-2014/012818
- DE-T5-112011 102 974
- US-A- 6 102 565
- US-A1- 2005 129 089
- US-A1- 2009 296 781

## Beschreibung

Die vorliegende Erfindung bezieht sich auf eine Vorrichtung zur Bestimmung und/oder Überwachung der Temperatur mit zumindest einem Temperatursensor sowie auf ein Verfahren zur Herstellung einer erfindungsgemäßen Vorrichtung.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials mit der Temperatur in Zusammenhang bringen, wie beispielsweise bei Verwendung von Widerstandselementen oder Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines sogenannten Dünnschicht-Sensors, insbesondere eines Resistance Temperature Detectors (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Die Widerstandselemente werden häufig mittels eines Lötverfahrens innerhalb eines Sensorkopfes, beispielsweise eine Fühlerspitze, und insbesondere auf den Innenboden einer z. B. aus Edelstahl bestehenden Hülse, eingebracht. Als Lötverfahren wird in vielen Fällen eine sogenannte SMD-Lötung durchgeführt, bei welcher zunächst ein Lot auf ein erstes Bauteil aufgebracht wird und anschließend ein zweites Bauteil aufgesetzt und durch Erhitzung mit dem ersten Bauteil verlötet wird. Für das Beispiel eines Sensorkopfes eines Widerstandsthermometers wird üblicherweise zunächst eine definierte Menge Lot in festem Zustand ("Lotplättchen") in den Sensorkopf eingebracht und durch anschließendes Erhitzen mit dem Innenboden des Sensorkopfes verschmolzen. Das Sensorelement wird dann mit seiner metallisierten Seite in das Lot eingetaucht und auf diese Weise innerhalb des Sensorkopfes verlötet. Verfahren zum Herstellen einer derartigen Lotverbindung für ein Thermometer sind beispielsweise aus der Offenlegungsschrift DE102006048448A1 sowie aus der bisher unveröffentlichten deutschen Patentanmeldung mit dem Aktenzeichen 102015112199.9 bekannt geworden.

Grundsätzlich hat bei einem entsprechenden Widerstandsthermometer die Lotverbindung einen großen Einfluss auf die thermischen Eigenschaften des Thermometers, insbesondere auf die thermische Ankopplung zwischen Widerstandselement und Sensorkopf. Entsprechende Thermometer werden von der Anmelderin beispielsweise unter der Bezeichnung Quicksens hergestellt und vertrieben.

Alternativ zu solchen Thermometern, bei welchen das Widerstandselement mit dem Sensorkopf verlötet ist, sind zahlreiche Thermometer bekannt geworden, bei denen die Temperatursensoren eingeschlossen und/oder gekapselt werden, insbesondere in Keramikpulvern, wie beispielsweise Magnesiumoxid (MgO) oder Aluminiumoxid (Al₂O₃), oder in einem, insbesondere aushärtenden, Keramikverguss. Dieses Vorgehen dient einerseits der Fixierung der Temperatursensoren. Außerdem sorgt die Kapselung, beispielsweise in einem Keramikpulver, dafür, dass die Anschlussleitungen des Temperatursensor auch bei hohen Temperaturen, insb. bei Temperaturen von etwa bis zu 600°C, voneinander und vom Gehäuse des Sensorkopfes, insbesondere einer Fühlerspitze, welches häufig aus einem Metall oder eine Metalllegierung gefertigt ist, zu isolieren. Ein Verfahren zur Herstellung eines derart ausgestalteten Thermometers ist beispielsweise aus der Offenlegungsschrift DE02329239A1 bekannt geworden. Um einen Temperatursensor zu vergießen, werden mindestens eine vorgebbare Menge einer ersten und einer zweiten Komponente einer Vergussmasse in eine Gießform, insbesondere eine Fühlerspitze, eingebracht. Anschließend wird die Fühlerspitze gerüttelt und/oder in Schwingungen mit einer vorgebbaren Frequenz versetzt wird. Auch derartige Thermometer werden von der Anmelderin hergestellt und vertrieben, und tragen beispielsweise die Bezeichnung Strongsens.

Vorteilhaft weisen Widerstandsthermometern, bei welchen der Temperatursensor mit dem Sensorkopf verlötet ist, besonders gute Ansprechzeiten für eine Reaktion auf eine Änderung der Temperatur eines Mediums auf. Entsprechende Thermometer sind nachteilig allerdings nicht für den Einsatz von hohen Temperaturen, insbesondere Temperaturen T>200 °C, geeignet. Auch weisen sie im Vergleich zu Thermometern, bei welchen der Temperatursensor eingeschlossen und/oder gekapselt ist, eine verminderte mechanische Stabilität auf. Thermometer mit eingeschlossen und/oder gekapselt Temperatursensoren wiederum verfügen nachteilig im Vergleich zu Thermometern mit eingelöteten Temperatursensoren über schlechtere Ansprechzeiten.

Aus der US6102565 ist ein Temperatursensor mit einem Sensorkopf, in welchem ein Thermoelement und zwei Füllmaterialien angeordnet sind. Das erste Füllmaterial dient zur Steigerung der Wärmeleitung im den Temperatursensor umgebenden Bereich des Sensorkopfs und das zweite Füllmaterial der Reduktion der Wärmeleitung in einem dem Temperatursensor abgewandten Bereich des Sensorkopfes. Die DE112011102974T5 betrifft einen geschlossenen oder eingekapselten Temperatursensor, bei welchem ein aus mehreren Materialien bestehendes Füllmaterial das Temperaturmesselement umgibt.

Davon ausgehend liegt der vorliegenden Erfindung die Aufgabe zugrunde, die Ansprechzeiten von Thermometern mit eingeschlossenen und/oder gekapselten Temperatursensoren zu verbessern.

Diese Aufgabe wird gelöst durch die Vorrichtung nach Anspruch 1 sowie durch das Verfahren zur Herstellung einer erfindungsgemäßen Vorrichtung nach Anspruch 11. Vorteilhafte Ausgestaltungen sind jeweils in den abhängigen Ansprüchen angegeben.

Bezüglich der Vorrichtung wird die erfindungsgemäße Aufgabe gelöst durch eine Vorrichtung zur Bestimmung und/oder Überwachung der Temperatur eines Mediums umfassend zumindest einen in einem Sensorkopf angeordneten Temperatursensor, wobei zumindest ein Innenvolumen des Sensorkopfes zumindest teilweise mit zumindest einem ersten Material und zumindest teilweise mit zumindest einem zweiten Material gefüllt ist. Dabei dient das erste Material der Fixierung zumindest einer Komponente des Temperatursensors innerhalb des Sensorkopfes, und ist dazu ausgestaltet, zumindest eine Komponente des Temperatursensors innerhalb des Sensorkopfes mechanisch, zu stabilisieren, und gegenüber Vibrationen zu schützen. Es handelt sich bei dem zumindest einen ersten Material um eine Keramik, insbesondere ein Magnesiumoxid oder ein Aluminiumoxid, oder um einen, insbesondere aushärtenden, Keramikverguss. Das zweite Material dient der Wärmeleitung innerhalb des Sensorkopfes. Es handelt sich bei dem zumindest einen zweiten, beispielsweise in Form eines Pulvers vorliegenden, Material um Kohlenstoffnanoröhrchen. Zumindest eine Komponente des Temperatursensors, bevorzugt das gesamte Sensorelement, beispielsweise ein Widerstandselement, und/oder zumindest ein Teilbereich zumindest eines Anschlussdrahtes für den Temperatursensor, sind also erfindungsgemäß eingeschlossen und/oder gekapselt. Im Gegensatz zu herkömmlichen Thermometern mit eingeschlossenen und/oder gekapselten Temperatursensoren weist das verwendete Füllmaterial erfindungsgemäß zumindest ein erstes Material auf, welches der Wärmeleitung innerhalb des Sensorkopfes dient. Dies führt zu einer deutlich verbesserten Ansprechzeit des Temperatursensors. Im Gegensatz zu Thermometern, bei welchen das Sensorelement über eine Lötung direkt mit dem Sensorkopf verbunden ist, ist der Temperatursensor aufgrund des zweiten für das Füllmaterial verwendeten Materials darüber hinaus innerhalb des Sensorkopfes fixiert.

Zur Bestimmung und/oder Überwachung der Temperatur des jeweiligen Mediums wird der Sensorkopf mit dem Medium in, insbesondere in thermischen, Kontakt gebracht. Es findet ein Wärmaustausch zwischen der Vorrichtung und dem Medium statt, bis sich ein thermisches Gleichgewicht einstellt. Dann weisen der Sensorkopf mit dem Temperatursensor und das Medium im Wesentlichen die gleiche Temperatur, im Folgenden als Gleichgewichtstemperatur bezeichnet, auf. Bis dieses Gleichgewicht erreicht ist, findet eine Wärmeausbreitung von der dem Medium zugewandten Oberfläche des Sensorkopfes ausgehend ins Innere des Sensorkopfes bis zum Temperatursensor statt. Unter Wärmeausbreitung wird in diesem Zusammenhang sowohl ein Wärmefluss vom Medium zum Temperatursensor, entsprechend dem Falle, dass das Medium eine höhere Temperatur aufweist als das Thermometer, als auch in umgekehrter Richtung, im Falle, dass das Thermometer eine höhere Temperatur aufweist, verstanden. Die Zeit, welche vergeht, bis sich nach einer Temperaturänderung ΔT des Mediums wieder thermisches Gleichgewicht einstellt, korreliert dabei mit der Ansprechzeit des Thermometers. Die Ansprechzeit eines Thermometers hängt dabei grundsätzlich von den Wärmeleitfähigkeiten der jeweils verwendeten Materialien sowie von der jeweiligen geometrischen Ausgestaltung und von der Güte von zwischen verschiedenen Materialien hergestellten Kontaktierungen ab.

In einer Ausgestaltung umfasst der Temperatursensor zumindest ein temperaturempfindliches Sensorelement und zumindest einen Anschlussdraht zur, insbesondere elektrischen, Kontaktierung des Sensorelements.

Das zumindest eine erste Material ist bevorzugt dazu ausgestaltet, eine elektrische Isolierung der zumindest einen Komponente des Temperatursensors, insbesondere des zumindest einen Anschlussdrahtes des Temperatursensors, zu bewirken. Eine elektrische Isolierung zumindest eines Anschlussdrahtes des Temperatursensors kann alternativ auch durch eine aus einem elektrisch isolierenden Material bestehende Hülse oder einen entsprechenden Formkörper vorgenommen werden.

In einer bevorzugten Ausgestaltung weist das zumindest eine zweite Material eine hohe Wärmeleitfähigkeit λ, insbesondere eine Wärmeleitfähigkeit λ von λ>100W/(mK) bei 0°C, auf. Das zumindest eine zweite Material ist also bevorzugt dazu ausgestaltet, eine möglichst hohe Wärmeübertragung pro Zeiteinheit innerhalb zumindest eines Teilbereichs des Sensorkopfes zu gewährleisten.

In einer weiteren bevorzugten Ausgestaltung ist das zumindest eine zweite Material derart gewählt, dass eine thermische Zeitkonstante für einen würfelförmigen Körper aus dem zweiten Material mit einem Volumen von 1mm³ kleiner als 0,1s ist. Die thermische Zeitkonstante kann aus einem Produkt eines Wärmewiderstands und einer Wärmekapazität des zweiten Materials berechnet werden.

Die Wärmekapazität C eines, insbesondere homogenen, Körpers ist definiert als C=cm, wobei c die spezifische Wärmekapazität und m die Masse des Körpers ist. Der Wärmewiderstand Rₜₕ, auch als Wärmeleitwiderstand oder als thermischer Widerstand bezeichnet, wiederum ergibt sich zu Rₜₕ=I/(λA), wobei I die Länge des Körpers, A dessen entlang der Länge konstante Querschnittsfläche und λ die jeweilige Wärmeleitfähigkeit ist.

Das Produkt aus der Wärmekapazität C und dem Wärmewiderstand Rₜₕ ist die thermische Zeitkonstante τ, welche erfindungsgemäß einen möglichst geringen Wert aufweisen sollte. Insbesondere sollte die auf einen Körper mit einem Volumen von 1mm³ normierte Zeitkonstante kleiner als 0,1s sein.

Kohlenstoffnanoröhrchen weisen bei Raumtemperatur eine Wärmeleitfähigkeit λ von A>3000W/(mK), die Wärmeleitfähigkeit λ von Bornitrid, insbesondere hexagonalem Bornitrid liegt bei λ≈600W/(mK) in einer Richtung entlang einer Basis-Ebene. Jeweils für eine Temperatur von 0°C liegen dagegen die Wärmeleitfähigkeiten λ von Aluminiumnitrid bei λ≈180-220W/(mK) von Siliziumkarbid bei λ≈350W/(mK). Für Aluminium beträgt die Wärmeleitfähigkeit λ bei λ≈236W/(mK) bei einem Reinheitsgrad >99,5%, für Silber bei λ≈429W/(mK) bei 0°C, und Kupfer λ von λ≈200-400W/(mK) je nach Reinheitsgrad.

Gemäß einer Ausgestaltung der erfindungsgemäßen Vorrichtung ist zumindest ein Innenvolumen des Sensorkopfes mit einem Gemisch umfassend zumindest das zumindest eine erste und das zumindest eine zweite Material gefüllt. Bei dieser Ausgestaltung gilt es zu gewährleisten, dass die zumindest eine Komponente, bevorzugt jede nach außen hin elektrisch leitende Komponente, des Temperatursensors elektrisch isoliert ist. Es handelt sich also bevorzugt bei dem zumindest einen ersten und/oder zweiten Material um ein elektrisch isolierendes Material, oder die zumindest eine Komponente des Temperatursensors ist auf andere Art und Weise elektrisch isoliert. Hierzu stehen dem Fachmann alle gängigen Optionen zur elektrischen Isolierung einzelner Komponenten zur Verfügung.

Gemäß einer alternativen, besonders bevorzugten, Ausgestaltung umfasst zumindest ein Innenvolumen des Sensorkopfes zumindest zwei Teilbereiche, wobei ein erster Teilbereich des Innenvolumens mit dem zumindest einen ersten Material gefüllt ist und wobei ein zweiter Teilbereich des Innenvolumens mit dem zumindest einen zweiten Material gefüllt ist.

Hierbei ist es von Vorteil, wenn der erste Teilbereich zumindest teilweise im Bereich des zumindest einen Anschlussdrahtes angeordnet ist, und wenn der zweite Teilbereich zumindest teilweise im Bereich des Sensorelements angeordnet ist. Bevorzugt handelt es sich in diesem Fall zumindest bei der zumindest einen ersten Komponente um ein elektrisch isolierendes Material. Eine schlechte Wärmeleitfähigkeit des zumindest einen ersten Materials ist bei einer derartigen Anordnung von Vorteil, weil auf diese Art und Weise eine Wärmeleitung zwischen dem Thermometer bzw. dem Prozess und der Umgebung verringert wird.

In einer vorteilhaften Ausgestaltung umfasst der Sensorkopf ein, insbesondere zylindrisches, Mantelelement, und ein, insbesondere kreisförmiges, Bodenelement umfasst. Es handelt sich bevorzugt bei dem Sensorkopf um eine Fühlerspitze eines Thermometers, insbesondere um eine hülsenförmige Fühlerspitze.

In einer weiteren bevorzugten Ausgestaltung umfasst der Temperatursensor ein Widerstandselement, insbesondere ein Platinelement, oder ein Thermoelement.

Die erfindungsgemäße Aufgabe wird weiterhin gelöst durch ein Verfahren zur Herstellung einer erfindungsgemäßen Vorrichtung zur Bestimmung und/oder Überwachung der Temperatur eines Mediums, umfassend folgende Verfahrensschritte:
- Einbringen zumindest einer Komponente eines Temperatursensors in einen Sensorkopf
- Füllen eines Innenvolumens des Sensorkopfes zumindest teilweise mit einem ersten Material und zumindest teilweise mit einem zweiten Material.

Zur Einbringung des zumindest einen ersten Materials und des zumindest einen zweiten Materials kann beispielsweise das in der Offenlegungsschrift DE02329239A1 beschriebene Verfahren eingesetzt werden.

Eine Ausgestaltung des Verfahrens beinhaltet, dass zumindest ein Innenvolumen des Sensorkopfes mit einem Gemisch umfassend zumindest das zumindest eine erste Material und das zumindest eine zweite Material, gefüllt wird. Das zumindest eine erste und das zumindest eine zweite Material können einerseits zuerst miteinander vermischt und anschließend in das Innenvolumen eingefüllt werden. Andererseits ist es ebenfalls möglich, das zumindest eine erste und das zumindest eine zweite Material nacheinander in den Sensorkopf einzufüllen und innerhalb des Sensorkopfes miteinander zu vermischen.

In einer alternativen Ausgestaltung des erfindungsgemäßen Verfahrens wird in einen ersten Teilbereich zumindest das zumindest eine erste Material, und in einen zweiten Teilbereich das zumindest eine zweite Material gefüllt.

Die in Zusammenhang mit der erfindungsgemäßen Vorrichtung beschriebenen Ausgestaltungen sind mutatis mutandis auch auf das erfindungsgemäße Verfahren anwendbar und umgekehrt.

Die Erfindung wird anhand der nachfolgenden Figuren genauer erläutert. Es zeigt
Fig. 1 eine schematische Zeichnung eines Thermometers nach Stand der Technik,
Fig. 2 einen Sensorkopf eines Thermometers in einer ersten Ausgestaltung der vorliegenden Erfindung, und
Fig. 3 einen Sensorkopf eines Thermometers in einer zweiten Ausgestaltung der vorliegenden Erfindung.

Im Folgenden werden gleiche Elemente jeweils mit gleichen Bezugszeichen versehen.

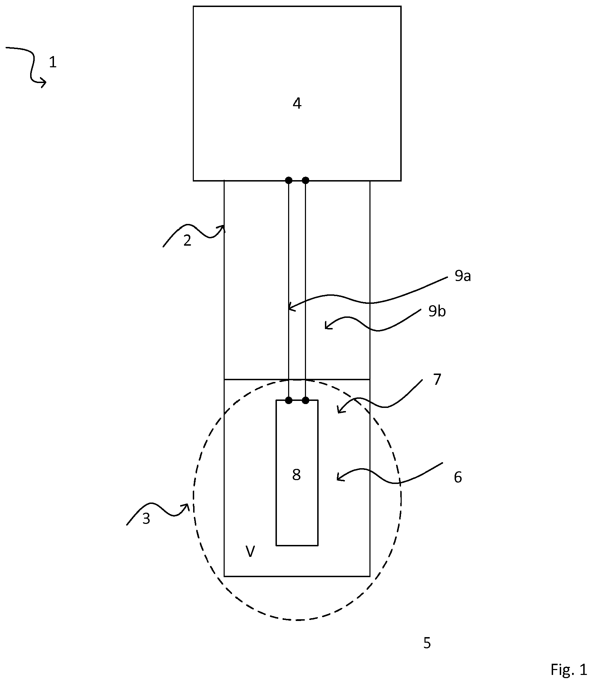

In Fig.1 ist eine schematische Abbildung eines Thermometers 1 mit einem Schutzrohr 2 und einer Elektronikeinheit 4 gemäß dem Stand der Technik gezeigt. Der dem jeweiligen Medium 5 zugewandte Teilbereich des Schutzrohres 2 wird auch als Sensorkopf 3 bezeichnet. Ein Innenvolumen V des Sensorkopfes 3 ist mit einem Füllstoff 6, beispielsweise einem Keramikverguss, gefüllt. Ferner ist im Innenvolumen V des Sensorkopfes 3 ein Temperatursensor 7 angeordnet, welcher in der gezeigten Ausführung ein Sensorelement 8, hier in Form eines Widerstandselements, und zwei Anschlussdrähte 9a, 9b zur elektrischen Kontaktierung mit der Elektronikeinheit 5, umfasst. Das Sensorelement 8 sowie ein Teilabschnitt der Anschlussdrähte 9a,9b des Temperatursensors 7 sind durch den Füllstoff 6 innerhalb des Innenvolumens V des Sensorkopfes 3 eingeschlossen und/oder gekapselt. Dies führt zu einer besonders hohen mechanischen Stabilität und Vibrationsfestigkeit des Thermometers 1. Allerdings zeichnen sich die allgemein bekannten, zur Gewährleistung einer hohen mechanischen Stabilität und Vibrationsfestigkeit geeigneten Materialien nachteilig durch vergleichsweise geringe thermische Wärmeleitfähigkeiten λ aus. Somit weisen Thermometer 1, bei welchen zumindest eine Komponente des Temperatursensors 7, in diesem Fall das Sensorelement 7 und ein Teilabschnitt der Anschlussdrähte 9a,9b in einen Füllstoff 6 eingeschlossen oder innerhalb des Füllstoffs 6 gekapselt ist, durch vergleichsweise schlechtere Ansprechzeiten auf.

Dieser Problematik begegnet die vorliegende Erfindung dadurch, dass ein Innenvolumen V des Sensorkopfes 3 zumindest teilweise mit zumindest einem ersten Material 10 und zumindest teilweise mit zumindest einem zweiten Material 11 gefüllt ist, wobei das erste Material 10 der Fixierung zumindest einer Komponente, z. B. des Sensorelements 8 oder der Anschlussdrähte 9a,9b des Temperatursensors 7 innerhalb des Sensorkopfes 3 dient, und wobei das zweite Material 11 der Wärmeleitung innerhalb des Sensorkopfes 3 dient.

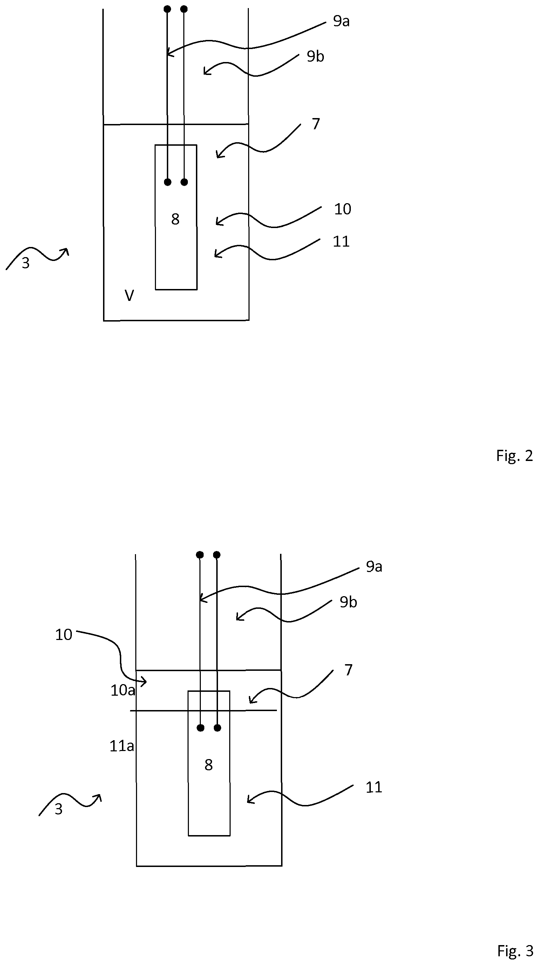

Eine erste Ausgestaltung der vorliegenden Erfindung ist in Fig. 2 abgebildet. Gezeigt ist eine schematische Zeichnung eines Sensorkopfes 3 mit einem Innenvolumen V, welches mit einem Gemisch aus dem zumindest einen ersten Material 10 und dem zumindest einen zweiten Material 11 gefüllt ist. Bei dem ersten Material handelt es sich beispielsweise um eine Keramik oder einen, insbesondere aushärtenden Keramikverguss, also um einen Füllstoff gemäß dem Stand der Technik. Bei dem zweiten Material dagegen handelt es sich um ein Material mit einer hohen Wärmeleitfähigkeit λ, erfindungsgemäß um Kohlenstoffnanoröhrchen. Die Wärmeleitfähigkeit von Kohlenstoffnanoröhrchen, und beispielsweise auch von hexagonalem Bornitrid, ist räumlich anisotrop. Entsprechend ist es vorteilhaft, wenn das zweite Material 11 im Falle einer anisotropen Wärmeleitfähigkeit λ derart innerhalb des Sensorkopfes 3 ausgerichtet wird, dass insbesondere entlang einer Verbindungsstrecke zwischen der äußeren Bewandung des Sensorkopfes 3 und des Sensorelements 8 des Temperatursensors 7 ein besonders hoher Wert für die Wärmeleitfähigkeit vorliegt. Dies kann im Falle von Kohlenstoffnanoröhrchen beispielsweise durch Anlegen eines geeigneten elektrischen Feldes, welches das Innenvolumen V des Sensorkopfes 3 durchsetzt, beim Befüllen des Sensorkopfes 3 mit den Kohlenstoffnanoröhrchen erreicht werden.

Um einen elektrischen Kurzschluss zwischen zumindest einer Komponente 8,9 des Temperatursensors 7 und dem Sensorkopf 3, welcher üblicherweise aus einem Metall gefertigt ist, zu gewährleisten, sind verschiedene Maßnahmen denkbar. Die Anschlussdrähte 8,9 können über einen großen Abschnitt hinweg durch eine elektrische Isolierung (nicht gezeigt) umgeben sein. Im Bereich der Kontaktierung zwischen den Anschlussdrähten 9a,9b kann ein elektrisch isolierendes Formteil (ebenfalls nicht gezeigt) zum Einsatz kommen. Alternativ kann beispielsweise auch dafür gesorgt werden, dass das erste 10 und zweite 11 Material in diesem Bereich nicht elektrisch leitfähig ist. Bezüglich dieser Thematik sind dem Fachmann ferner viele weitere Möglichkeiten bekannt, welche allesamt unter die vorliegende Erfindung fallen.

Eine zweite Ausgestaltung der vorliegenden Erfindung ist Gegenstand von Fig. 3. Im Unterschied zu Fig. 2 ist das Innenvolumen V des Sensorkopfes 3 in dieser zweiten Ausgestaltung in zwei Teilbereiche 10a und 11a unterteilt. Der erste Teilbereich 10a ist mit dem zumindest einen ersten Material 10 gefüllt, insbesondere einer Keramik oder einem Keramikverguss. Der zweite Teilbereich 11a wiederum ist mit dem zumindest einen zweiten Material 11, beispielsweise einem Pulver aus Kohlenstoffnanoröhrchen, gefüllt. Bevorzugt ist der erste Teilbereich 10a derart innerhalb des Sensorkopfes 3 angeordnet, dass er zumindest einen Teilabschnitt der Anschlussdrähte 9a, 9b umschließt, insbesondere einen Teilabschnitt der Anschlussdrähte 9a,9b, in welchem die elektrische Kontaktierung mit dem Sensorelement 8 vorgenommen wird.

Bevorzugt handelt es sich bei dem zumindest einem ersten Material 10 in dieser Ausgestaltung ferner um ein elektrisch isolierendes Material. Mittels des ersten Materials 10 wird in der in Fig. 3 gezeigten Ausgestaltung neben einem Teilabschnitt der Anschlussdrähte 9a,9b außerdem ein Teilabschnitt des Sensorelements 8 umschlossen. Auf diese Art und Weise ist der Temperatursensor 7 bestens innerhalb des Sensorkopfes 3 fixiert und das jeweilige Thermometer 1 weise entsprechend eine hohe mechanische Stabilität und Vibrationsfestigkeit auf.

Der zweite Teilbereich 11a ist wiederum bevorzugt derart angeordnet, dass er zumindest einen Teilabschnitt des Sensorelements 8 umgibt. Im Falle eines als Platin-Widerstandselements ausgestalteten, herkömmlichen Sensorelements 8, ist das Sensorelement 8 selbst üblicherweise außerhalb des Bereichs, in welchem die elektrische Kontaktierung mittels der Anschlussdrähte 9a,9b vorgenommen wird, elektrisch isoliert. Das zweite Material verfügt vorteilhaft über eine hohe Wärmeleitfähigkeit λ und das Thermometer 1 verfügt entsprechend über eine besonders gute Ansprechzeit auf eine Temperaturänderung ΔT eines Mediums 5. Auch für die Ausgestaltung gemäß Fig. 3 ist im Falle eines zweiten Materials 11 mit einer anistropen Wärmeleitfähigkeit λ eine Ausrichtung innerhalb des Sensorkopfes 3 denkbar.

Ein besonderer Vorteil, welcher sich aus einer Anordnung gemäß Fig. 3 ergibt, bei welcher das erste innerhalb des ersten Teilbereichs 10a angeordnete erste Material 10 eine geringe Wärmeleitfähigkeit λ aufweist, ist dadurch gegeben, dass das erste Material zusätzlich zur Herstellung einer hohen mechanischen Stabilität und Vibrationsfestigkeit des Temperatursensors 7 für eine Wärmeisolierung zwischen dem jeweiligen Medium 5 und der Umgebung bzw. der Elektronik 4 sorgt.

### Bezugszeichenliste

- 1: Thermometer
- 2: Schutzrohr
- 3: Sensorkopf
- 4: Elektronikeinheit
- 5: Medium
- 6: Füllstoff
- 7: Temperatursensor
- 8: Sensorelement
- 9a,9b: Anschlussdrähte
- 10: Erstes Material
- 10a: Erster Teilbereich
- 11: Zweites Material
- 11a: Zweiter Teilbereich

- Λ: Wärmeleitfähigkeit
- T: Temperatur
- V: Innenvolumen des Sensorkopfes

## Patentansprüche

1. Vorrichtung (1) zur Bestimmung und/oder Überwachung der Temperatur (T) eines Mediums (5) umfassend zumindest einen in einem Sensorkopf (3) angeordneten Temperatursensor (7),
wobei zumindest ein Innenvolumen (V) des Sensorkopfes (3) zumindest teilweise mit zumindest einem ersten Material (10) und zumindest teilweise mit zumindest einem zweiten Material (11) gefüllt ist,
wobei das erste Material (10) der Fixierung zumindest einer Komponente (8,9a,9b) des Temperatursensors (7) innerhalb des Sensorkopfes (3) dient und dazu ausgestaltet ist, zumindest eine Komponente (8,9a,9b) des Temperatursensors (7) innerhalb des Sensorkopfes (3) mechanisch, zu stabilisieren, und gegenüber Vibrationen zu schützen,
wobei es sich bei dem zumindest einen ersten Material (10) um eine Keramik, insbesondere ein Magnesiumoxid oder ein Aluminiumoxid, oder um einen, insbesondere aushärtenden, Keramikverguss handelt,
und
wobei das zweite Material (11) der Wärmeleitung innerhalb des Sensorkopfes (3) dient, **dadurch gekennzeichnet, dass**
es sich bei dem zumindest einen zweiten, beispielsweise in Form eines Pulvers vorliegenden, Material (11) um Kohlenstoffnanoröhrchen handelt.

2. Vorrichtung (1) nach Anspruch 1,
wobei der Temperatursensor (7) zumindest ein temperaturempfindliches Sensorelement (8) und zumindest einen Anschlussdraht (9a,9b) zur, insbesondere elektrischen, Kontaktierung des Sensorelements (8), umfasst.

3. Vorrichtung (1) nach Anspruch 1 oder 2,
wobei das zumindest eine erste Material (10) dazu ausgestaltet ist, eine elektrische Isolierung der zumindest einen Komponente (8,9a,9b) des Temperatursensors (7), insbesondere des zumindest einen Anschlussdrahtes (9a,9b) des Temperatursensors (7), zu bewirken.

4. Vorrichtung (1) nach zumindest einem der vorhergehenden Ansprüche,
wobei das zumindest eine zweite Material (11) eine Wärmeleitfähigkeit λ von A>100W/(mK) bei 0°C, aufweist.

5. Vorrichtung (1) nach zumindest einem der vorhergehenden Ansprüche,
wobei das zweite Material (11) derart gewählt ist, dass eine thermische Zeitkonstante (τ) für einen würfelförmigen Körper aus dem zweiten Material (11) mit einem Volumen von 1mm³ kleiner als 0,1s ist.

6. Vorrichtung (1) nach zumindest einem der vorhergehenden Ansprüche,
wobei zumindest ein Innenvolumen (V) des Sensorkopfes (3) mit einem Gemisch umfassend zumindest das zumindest eine erste Material (10) und das zumindest eine zweite Material (11) gefüllt ist.

7. Vorrichtung (1) nach zumindest einem der Ansprüche 1-5,
wobei zumindest ein Innenvolumen (V) des Sensorkopfes (3) zumindest zwei Teilbereiche (10a, 11a) umfasst,
wobei ein erster Teilbereich (10a) des Innenvolumens (V) mit dem zumindest einen ersten Material (10) gefüllt ist und wobei ein zweiter Teilbereich (10a) des Innenvolumens (V) mit dem zumindest einen zweiten Material (11a) gefüllt ist.

8. Vorrichtung (1) nach Anspruch 7, wenn der Anspruch 7 von Anspruch 2 abhängt,
wobei der erste Teilbereich (10a) zumindest teilweise im Bereich des zumindest einen Anschlussdrahtes (9a,9b) angeordnet ist, und wobei der zweite Teilbereich (11a) zumindest teilweise im Bereich des Sensorelements (8) angeordnet ist.

9. Vorrichtung (1) nach zumindest einem der vorhergehenden Ansprüche,
wobei der Sensorkopf (3) ein, insbesondere zylindrisches, Mantelelement, und ein, insbesondere kreisförmiges, Bodenelement umfasst.

10. Vorrichtung nach zumindest einem der vorhergehenden Ansprüche,
wobei der Temperatursensor (7) ein Widerstandselement (8) oder ein Thermoelement umfasst.

11. Verfahren zur Herstellung einer Vorrichtung (1) zur Bestimmung und/oder Überwachung der Temperatur (T) eines Mediums (5) nach zumindest einem der vorhergehenden Ansprüche, umfassend folgende Verfahrensschritte:
- Einbringen zumindest einer Komponente (8,9a,9b) des Temperatursensors (7) in den Sensorkopf (3), und
- Füllen des Innenvolumens (V) des Sensorkopfes (3) zumindest teilweise mit zumindest dem ersten Material (10) und zumindest teilweise mit zumindest dem zweiten Material (11).

12. Verfahren nach Anspruch 11 zur Herstellung einer Vorrichtung (1) nach dem Anspruch 6, wobei zumindest das Innenvolumen (V) des Sensorkopfes (3) mit einem Gemisch umfassend zumindest das zumindest eine erste Material (10) und das zumindest eine zweite Material (11), gefüllt wird.

13. Verfahren nach Anspruch 11 zur Herstellung einer Vorrichtung nach zumindest einem der Ansprüche 7 oder 8,
wobei in den ersten Teilbereich zumindest das erste Material gefüllt wird, und wobei in den zweiten Teilbereich das zweite Material gefüllt wird.

## Claims

1. Apparatus (1) designed to determine and/or monitor the temperature (T) of a medium (5), said apparatus comprising at least a temperature sensor (7) arranged in a sensor head (3),
wherein at least an internal volume (V) of the sensor head (3) is at least partially filled with at least a first material (10) and at least partially filled with at least a second material (11),
wherein the first material (10) serves to fix at least one component (8, 9a, 9b) of the temperature sensor (7) inside the sensor head (3) and is designed to mechanically stabilize at least a component (8, 9a, 9b) of the temperature sensor (7) inside the sensor head (3), and to protect against vibrations,
wherein the at least one first material (10) is a ceramic, particularly a magnesium oxide or an aluminum oxide, or a ceramic potting, particularly a hardened ceramic potting, and
wherein the second material (11) serves to conduct heat inside the sensor head (3),
**characterized in that**
the at least second material (11), present for example in powder form, is a carbon nanotube.

2. Apparatus (1) as claimed in Claim 1,
wherein the temperature sensor (7) comprises at least a temperature-sensitive sensor element (8) and at least a connection wire (9a, 9b) to establish contact, particularly electrically, of the sensor element (8).

3. Apparatus (1) as claimed in Claim 1 or 2,
wherein the at least one first material (10) is designed to implement an electrical isolation of the at least one component (8, 9a, 9b) of the temperature sensor (7), particularly of the at least one connection wire (9a, 9b) of the temperature sensor (7).

4. Apparatus (1) as claimed in at least one of the previous claims,
wherein the at least one second material (11) has a thermal conductivity λ of λ > 100 W/(mK) at 0 °C.

5. Apparatus (1) as claimed in at least one of the previous claims,
wherein the second material (11) is selected in such a way that a thermal time constant (τ) - for a cube-shaped body made of the second material (11) with a volume of 1 mm³ - is less than 0.1 s.

6. Apparatus (1) as claimed in at least one of the previous claims,
wherein at least an internal volume (V) of the sensor head (3) is filled with a mix comprising at least the at least one first material (10) and the at least one second material (11).

7. Apparatus (1) as claimed in at least one of the Claims 1 to 5,
wherein at least an internal volume (V) of the sensor head (3) comprises at least two subzones (10a, 11a),
wherein a first subzone (10a) of the internal volume (V) is filled with the at least one first material (10) and a second subzone (11a) of the internal volume (V) is filled with the at least one second material (11).

8. Apparatus (1) as claimed in Claim 7, if Claim 7 depends on Claim 2,
wherein the first zone (10a) is arranged at least partially in the zone of the at least one connection wire (9a, 9b), and
wherein the second zone (11a) is arranged at least partially in the zone of the sensor element (8).

9. Apparatus (1) as claimed in at least one of the previous claims,
wherein the sensor head (3) comprises an envelope element, particularly cylindrical, and a base element, particularly circular.

10. Apparatus (1) as claimed in at least one of the previous claims,
wherein the temperature sensor (7) comprises a resistance element (8) or a thermocouple.

11. Procedure designed to manufacture an apparatus (1) designed to determine and/or monitor the temperature (T) of a medium (5) as claimed in at least one of the previous claims, wherein said procedure comprises the following steps:
Introduction of the at least one component (8, 9a, 9b) of the temperature sensor (7) into the sensor head (3), and
Filling of the internal volume (V) of the sensor head (3) at least partially with at least the first material (10) and at least partially with at least the second material (11).

12. Procedure as claimed in Claim 11 to manufacture an apparatus (1) as claimed in Claim 6,
wherein at least the internal volume (V) of the sensor head (3) is filled with a mix comprising at least minimum the at least one first material (10) and the at least one second material (11).

13. Procedure as claimed in Claim 11 to manufacture an apparatus (1) as claimed in at least one of the Claims 7 or 8,
wherein at least the first material is filled in the first subzone, and
wherein the second material is filled in the second subzone.

## Revendications

1. Dispositif (1) destiné à la détermination et/ou à la surveillance de la température (T) d'un produit (5), lequel dispositif comprend au moins un capteur de température (7) disposé dans une tête de capteur (3),
dispositif pour lequel au moins un volume interne (V) de la tête de capteur (3) est au moins partiellement rempli d'au moins un premier matériau (10) et au moins partiellement rempli d'au moins un deuxième matériau (11),
le premier matériau (10) servant à fixer au moins un composant (8, 9a, 9b) du capteur de température (7) à l'intérieur de la tête de capteur (3) et étant conçu pour stabiliser mécaniquement au moins un composant (8, 9a, 9b) du capteur de température (7) à l'intérieur de la tête de capteur (3), ainsi que pour le protéger contre les vibrations,
l'au moins un premier matériau (10) étant une céramique, notamment un oxyde de magnésium ou un oxyde d'aluminium, ou un enrobage de céramique,
notamment un enrobage de céramique durcissable, et
le deuxième matériau (11) servant à conduire la chaleur à l'intérieur de la tête de capteur (3),
**caractérisé en ce que**
concernant l'au moins un deuxième matériau (11), qui est par exemple présent sous forme de poudre, il s'agit de nanotubes de carbone.

2. Dispositif (1) selon la revendication 1,
pour lequel le capteur de température (7) comprend au moins un élément capteur sensible à la température (8) et au moins un fil de raccordement (9a, 9b) pour la mise en contact, notamment électrique, de l'élément capteur (8).

3. Dispositif (1) selon la revendication 1 ou 2,
pour lequel l'au moins un premier matériau (10) est conçu pour réaliser une isolation électrique de l'au moins un composant (8, 9a, 9b) du capteur de température (7), notamment de l'au moins un fil de raccordement (9a, 9b) du capteur de température (7).

4. Dispositif (1) selon au moins l'une des revendications précédentes,
pour lequel l'au moins un deuxième matériau (11) présente une conductivité thermique λ de λ > 100 W/(mK) à 0 °C.

5. Dispositif (1) selon au moins l'une des revendications précédentes,
pour lequel le deuxième matériau (11) est choisi de telle sorte qu'une constante de temps thermique (τ) - pour un corps de forme cubique composé du deuxième matériau (11) ayant un volume de 1 mm³ - est inférieure à 0,1 s.

6. Dispositif (1) selon au moins l'une des revendications précédentes,
pour lequel au moins un volume interne (V) de la tête de capteur (3) est rempli d'un mélange comprenant au minimum l'au moins un premier matériau (10) et l'au moins un deuxième matériau (11).

7. Dispositif (1) selon au moins l'une des revendications 1 à 5,
pour lequel au moins un volume intérieur (V) de la tête de capteur (3) comprend au moins deux zones partielles (10a, 11a),
une première zone partielle (10a) du volume intérieur (V) étant remplie de l'au moins un premier matériau (10) et une deuxième zone partielle (11a) du volume intérieur (V) étant remplie de l'au moins un deuxième matériau (11).

8. Dispositif (1) selon la revendication 7, lorsque la revendication 7 dépend de la revendication 2,
pour lequel la première partie (10a) est disposée au moins partiellement dans la zone de l'au moins un fil de raccordement (9a, 9b), et
pour lequel la deuxième partie (11a) est disposée au moins partiellement dans la zone de l'élément capteur (8).

9. Dispositif (1) selon au moins l'une des revendications précédentes,
pour lequel la tête de capteur (3) comprend un élément d'enveloppe, notamment cylindrique, et un élément de base, notamment circulaire.

10. Dispositif (1) selon au moins l'une des revendications précédentes,
pour lequel le capteur de température (7) comprend un élément résistif (8) ou un thermocouple.

11. Procédé destiné à la fabrication d'un dispositif (1) destiné à la détermination et/ou à la surveillance de la température (T) d'un produit (5) selon au moins l'une des revendications précédentes, lequel procédé comprend les étapes suivantes :
Introduction d'au moins un composant (8, 9a, 9b) du capteur de température (7) dans la tête de capteur (3), et
Remplissage du volume interne (V) de la tête de capteur (3) au moins partiellement avec au moins le premier matériau (10) et au moins partiellement avec au moins le deuxième matériau (11).

12. Procédé selon la revendication 11 destiné à la fabrication d'un dispositif (1) selon la revendication 6,
pour lequel au moins le volume interne (V) de la tête de capteur (3) est rempli d'un mélange comprenant au minimum l'au moins un premier matériau (10) et l'au moins un deuxième matériau (11).

13. Procédé selon la revendication 11 destiné à la fabrication d'un dispositif (1) selon au moins l'une des revendications 7 ou 8,
pour lequel au moins le premier matériau est rempli dans la première zone partielle, et
pour lequel le deuxième matériau est rempli dans la deuxième zone partielle.
